# EUROPEAN PATENT SPECIFICATION

(11) **EP 1 283 136 B1**
(45) Date of publication and mention of the grant of the patent: **14.12.2005**
(21) Application number: 02016907.4
(22) Date of filing: 31.07.2002
(51) Int. Cl.: B60R 21/22, B60R 21/16

(54) **Leg protection device for vehicle occupant**
Beinschutzvorrichtung für Fahrzeuginsassen
Dispositif de protection des jambes pour passager de véhicule

(30) Priority: 10.08.2001 JP 2001244018
(43) Date of publication of application: 12.02.2003
(73) Proprietor: TAKATA CORPORATION, Minato-ku, Tokyo 106-8510 (JP)
(72) Inventor: Igawa, Tadahiro, Minato-ku, Tokyo 106-8510 (JP); Sawa, Tomohiro, Minato-ku, Tokyo 106-8510 (JP); Abe, Kazuhiro, Minato-ku, Tokyo 106-8510 (JP)
(74) Representative: Banzer, Hans-Jörg

(56) References cited:
- DE-A- 19 946 477
- GB-A- 2 283 463
- US-A- 3 786 830
- US-A- 4 290 627
- US-A- 5 584 508
- PATENT ABSTRACTS OF JAPAN vol. 1999, no. 03, 31 March 1999 (1999-03-31) -& JP 10 315894 A (HONDA MOTOR CO LTD), 2 December 1998 (1998-12-02)

## Description

### [Technical Field of the Invention]

The present invention relates to a leg protection device for vehicle occupant that protects the lower leg of an occupant from hitting an interior panel or the like in front of the seat, for example, in case of a car collision.

### [Description of the Related Art]

Some leg protection devices for vehicle occupant, which protect the lower leg of an occupant from hitting an interior panel in front of the seat when a high-speed moving object, such as a car, experiences a head-on collision, mainly include an air bag disposed inside the interior panel (in the space on the back side of the interior panel), a gas generator for inflating the air bag, and a lid for covering the air bag in a normal state (when the high-speed moving object, such as a car, is not involved in a collision).

In such leg protection devices, the air bag is folded and placed inside the interior panel in the normal state, and the lid is mounted so as to cover the folded air bag.

When the car or the like experiences a head-on collision, the gas generator is actuated to expel gas, and the expelled gas is supplied to the air bag, thereby rapidly inflating the air bag. In this case, the lid is opened with the inflation of the air bag, and the air bag is permitted to protrude from the interior panel, and is inflated and deployed between the interior panel and the lower legs of the occupant so as to protect the lower legs from hitting the interior panel.

In JP 10315894 A and DE 19946477 A1 leg protection devices are described which correspond to the preamble of independent claim 1.

### [Problems to be Solved by the Invention]

In most cases, the interior panel serving as a seat-front member in the car or the like is convexly curved toward the interior of the vehicle compartment in cross section in the upward-downward direction. In such a case in which the interior panel is curved, when the air bag is inflated and deployed between the interior panel and the legs, a gap is sometimes formed between the air bag and the interior panel.

An object of the present invention is to provide a leg protection device for vehicle occupant in which an air bag is inflated and deployed along a seat-front member, such as an interior panel, with hardly any gap from the seat-front member even when the seat-front member is convexly curved toward the interior of the car cabin.

### [Means for Solving the Problems]

According to the present invention, this object is achieved by a leg protection device as defined in claim 1. The dependent claim defines an advantageous and preferred embodiment of the present invention.

A leg protection device for vehicle occupant of the present invention includes an air bag disposed inside a seat-front member, the air bag having a rear panel that is placed along the seat-front member when the air bag is inflated and a front panel facing an occupant, and a gas generator for inflating the air bag, wherein the length in the upward-downward direction of a center portion in the rightward-leftward direction of the front panel when the air bag is inflated is larger than the length in the upward-downward direction of a center portion in the rightward-leftward direction of the rear panel when the air bag is inflates. The peripheral portions of the front panel and the rear panel are sewn together, thereby forming the airbag.

In such a leg protection device for vehicle occupant, when the air bag is inflated, the rear panel is concavely curved because the vicinity of the center portion in the rightward-leftward direction of the front panel of the air bag extends farther than the rear panel in the upward-downward direction. As a result, even when the seat-front member is convexly curved toward the cabin interior, the air bag is deployed with hardly any gap from the convexly curved seat-front member.

In the present invention, it is preferable that the front panel have a tucked portion so that the length in the upward-downward direction of the center portion in the rightward-leftward direction of the front panel is larger than the length in the upward-downward direction of the center portion in the rightward-leftward direction of the rear panel. In this case, when inflated, the air bag is shaped along the surface of the seat-front member so that the area close to the center portion of the front panel reliably extends farther and so that the rear panel is sufficiently concavely curved.

### [Brief Description of the Drawings]

Fig. 1 is a longitudinal sectional view showing a normal state of a section in front of a passenger's seat in a car having a leg protection device for vehicle occupant according to an embodiment of the present invention.
Figs. 2(a) and 2(b) are longitudinal sectional views of the section in front of the passenger's seat in the car having the leg protection device shown in Fig. 1 when an air bag is inflated.
Fig. 3 is an exploded perspective view of the air bag shown in Fig. 1.
Figs. 4(a) and 4(b) are a perspective view and a sectional view, respectively, of the air bag shown in Fig. 1.

### [Description of the Embodiments]

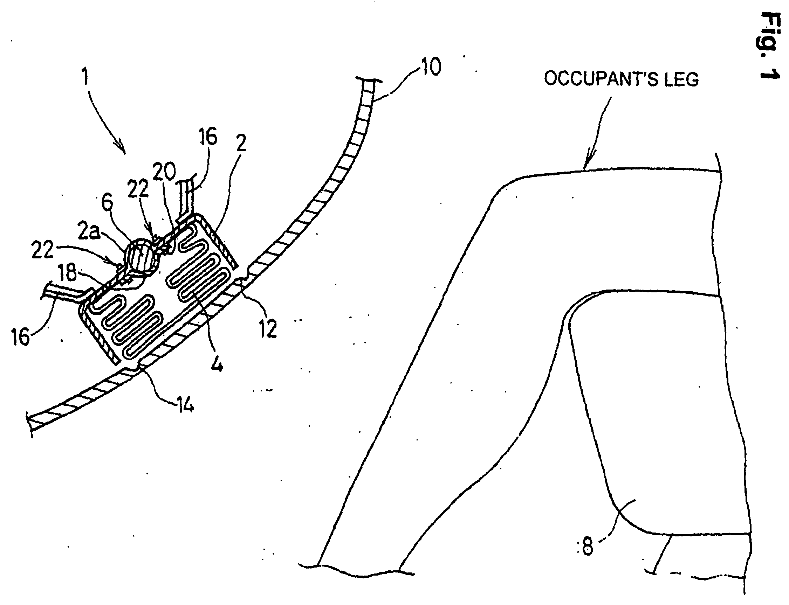

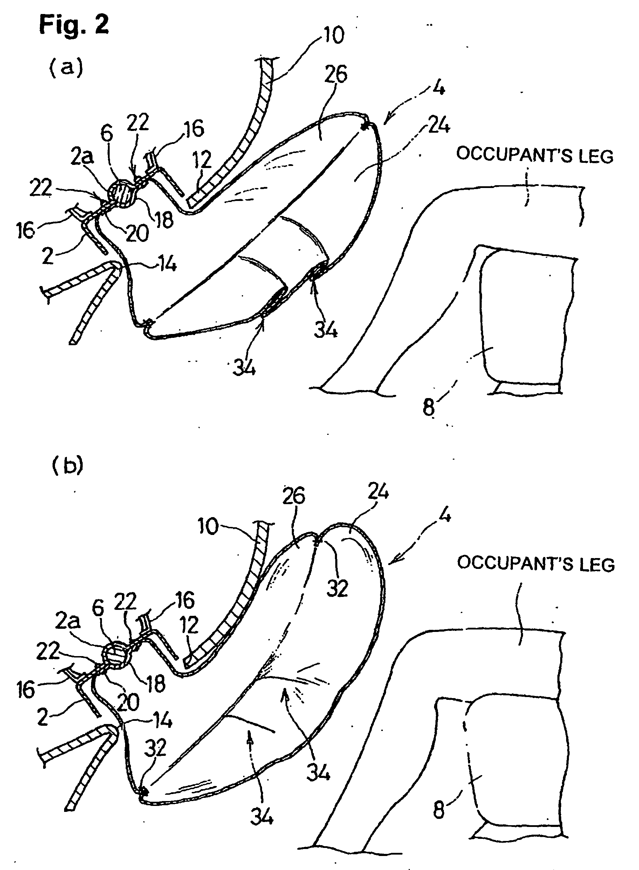

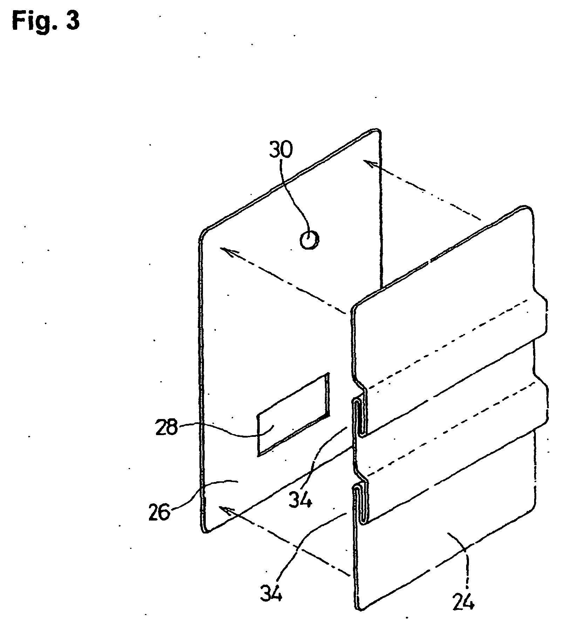

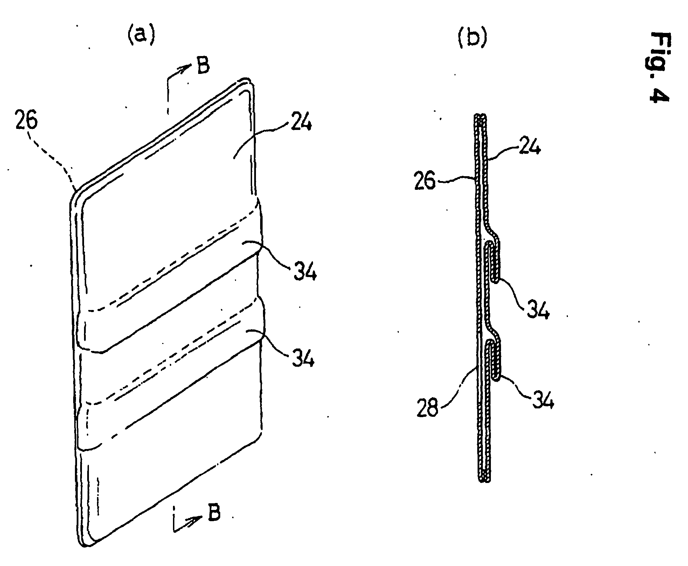

An embodiment of the present invention will be described below with reference to the drawings. Fig. 1 is a longitudinal sectional view showing a normal state of a section of a car in front of a passenger's seat, which has a leg protection device for vehicle occupant according to an embodiment of the present invention. Figs. 2(a) and 2(b) are longitudinal sectional views of the same section as that in Fig. 1 when an air bag of the leg protection device is inflated, respectively, showing a state in which the air bag of the leg protection device is being inflated, and a state in which the inflation of the air bag is almost completed. Fig. 3 is an exploded perspective view of the air bag, Fig. 4(a) is a perspective view the air bag as a final product, and Fig. 4(b) is a sectional view, taken along line B-B in Fig. 4(a).

A leg protection device 1 for vehicle occupant includes a retainer 2 shaped like a container having an opening at the front thereof (a surface facing the occupant), an air bag 4 accommodated in the retainer 2 in a folded state, and a gas generator 6 for inflating the air bag 4, and the front opening of the retainer 2 is covered with an interior panel 10 placed in front of a passenger's seat 8 and serving as a seat-front member. The interior panel 10 has a longitudinal cross section convexly curved toward the interior of the cabin of the vehicle (a cross section along a surface vertical to the forward and backward direction of the vehicle).

On the back surface of the interior panel 10 (a surface of the interior panel 10 opposite from the surface facing the occupant), an area as a lid that is defined by a groove-shaped tear line (tear-expediting portion) 12 and a hinge portion (bending-inducing portion) 14 is formed at a height equivalent to the adjacency of the sitting surface of the passenger's seat 8. The tear line 12 extends along the upper edge and right and left side edges of the lid area, and the hinge portion 14 extends along the lower edge of the lid area. The retainer 2 is placed inside the interior panel 10 so that the front opening thereof is aligned with the lid area, and is fixed to a car-body member (not shown) via brackets 16.

A lid may be formed separate from the interior panel 10 instead of being thus formed integrally with the interior panel 10.

When the lid area of the interior panel 10 is pressed from the inside of the interior panel 10 by the air bag 4 that is inflated by gas from the gas generator 6, the tear line 12 is torn along the upper edge and both the right and left side edges thereof, the lid area is bent from the hinge portion 14 along the lower edge, and an upper part thereof is thereby turned like a flap, and is opened out toward the front side (occupant side) of the interior panel 10.

The gas generator 6 is substantially cylindrical in this embodiment. One half in the circumferential direction of the gas generator 6 is fitted in a recess 2a formed on the bottom surface of the retainer 2, and is fixed to the bottom surface of the retainer 2 by a pressing member 18 attached from the side of the other half. The pressing member 18 has a flange-shaped presser plate 20 that extends so as to surround the recess 2a along the bottom surface of the retainer 2, and is fixed to the bottom surface of the retainer 2 by fixtures 22, such as bolts and nuts, via the presser plate 20. The structure and placement of the gas generator 6 are not limited to the above.

As shown in Figs. 3 and 4, the air bag 4 is composed of two panels, a front panel 24 on the occupant side, and a rear panel 26 on the opposite side. The rear panel 26 has an opening 28 for admitting gas from the gas generator 6, and a vent hole 30. The front panel 24 and the rear panel 26 are substantially rectangular panels, and the length in the upward-downward direction of the front panel 24 is larger by a predetermined length than the length in the upward-downward direction of the rear panel 26. The gas-admission opening 28 is placed in one half of the rear panel 26 in the upward-downward direction, and the vent hole 30 is placed in the other half. The length in the rightward-leftward direction of the front panel 24 and the length in the rightward-leftward direction of the rear panel 26 are equal to each other.

The peripheral portions of the front panel 24 and the rear panel 26 are sewn together with a sewing thread 32 (see Fig. 2), thereby forming the air bag 4 shaped like a bag.

When sewing the peripheral portion of the front panel 24 and the peripheral portion of the rear panel 26, tucked portions 34 are formed in advance by overlapping the adjoining portions in the middle in the upward-downward direction of the front panel 24 without binding the portions in order to reduce the length in the upward-downward direction of the front panel 24. The length in the upward-downward direction of the front panel 24 is reduced by the tucked portions 34 so that it is substantially equal to the length in the upward-downward direction of the rear panel 26. In this state, the front panel 24 and the rear panel 26 are aligned, and the peripheral portions thereof are sewn together with the sewing thread 32.

In this case, the tucked portions 34 are folded on the front surface of the front panel 24, as shown in Fig. 3, and the edges in the upward-downward direction of the front panel 24 included in the tucked portions 34 are also sewn with the sewing thread 32 together with the edges in the upward-downward direction of the other portions of the front panel 24.

In this embodiment, the front panel 24 has two tucked portions 34. The peripheral portions of the front panel 24 and the rear panel 26 connected by the sewing thread 32 are placed inside the air bag 4 as a final product.

The air bag 4 is placed so that the upward-downward direction of the front panel 24 and the rear panel 26 is substantially vertical, and the above-described half of the rear panel 26, in which the gas-admission opening 28 is disposed, is disposed at the lower position when inflated, and the air bag 4 is connected to the interior of the retainer 2 because the peripheral portion of the gas-admission opening 28 is clamped between the presser plate 20 of the pressing member 18 and the bottom surface of the retainer 2.

When the car having the leg protection device 1 with such a configuration experiences a head-on collision, the gas generator 6 is actuated, gas is injected into the air bag 4, and the air bag 4 starts to inflate. As the air bag 4 inflates, the lid area of the interior panel 10 is pushed open, and the air bag 4 protrudes toward the front side of the interior panel 10.

Subsequently, when the internal pressure of the air bag 4 gradually increases, and a tension produced in the planar direction of the front panel 24 and the rear panel 26 increases, the adjoining portions in the upward-downward direction of the front panel 24, which overlap in the tucked portions 34, are separated by the planar tension, and are deployed in the upward-downward direction of the front panel 24. For this reason, the front panel 24 spreads out in the upward-downward direction so that it becomes larger than the rear panel 26, and the air bag 4 is inflated and deployed in close contact with the interior panel 10 so that the front panel 24 is concavely curved toward the rear panel 26 by the difference in the upward-downward direction of the front panel 24 from the rear panel 26. As a result, the air bag 4 is deployed along the interior panel 10, as shown in Fig. 2(b).

In the leg protection device 1, since the air bag 4 is deployed from the height adjacent to the sitting surface of the passenger's seat 8 to the upper part of the interior panel 10 while being curved toward the rear panel 26 along the interior panel 10, it can cover the wide area of the interior panel 10. Furthermore, since the air bag 4 is deployed with hardly any gap from the interior panel 10, even when the legs of the occupant heavily hits the air bag 4, the air bag 4 is supported by the interior panel 10 from the side of the rear panel 26, and can reliably receive the legs. In addition, since the air bag 10 is inflated and deployed along the interior panel 10, it is prevented from being excessively protruded toward the occupant.

While the front panel 24 has two tucked portions in the above embodiment, it may have one or at least three tucked portions. The tucked portions may be formed at the positions other than those illustrated.

For example, the front panel 24 may be made of a material that more easily elongates in the upward-downward direction (in the upward-downward direction when mounted in the vehicle or the like) than the rear panel 26 so that it extends farther than the rear panel 26 in the upward-downward direction and so that the air bag 4 is concavely curved toward the rear panel 26 when inflated. In such a structure, the tucked portions 34 may be omitted.

While the air bag 4 is composed of the front panel 24 and the rear panel 26 that are substantially rectangular in the above embodiment, the panels 24 and 26 may have not only this shape, but also various shapes, such as a circle, an ellipse, or a rectangle that is long sideways.

While the tucked portions 34 are placed in the rightward-leftward direction of the front panel 24 in the above embodiment, they may be placed in the upward-downward direction of the front panel 24, depending on the shape of the interior panel 10 and the vehicle layout. The tucked portions 34 may be placed in both the rightward-leftward direction and the upward-downward direction of the front panel 24 so that the air bag 4 is inflated while the side of the rear panel 26 is almost caved in.

### [Advantages]

As described in detail above, the present invention provides the leg protection device that allows the air bag to be inflated and deployed along the seat-front member, such as the interior panel, with hardly any gap from the seat-front member even when the seat-front member is convexly curved toward the interior of the vehicle compartment.

## Claims

1. A leg protection device (1) for a vehicle occupant, comprising
an air bag (4) disposed inside a seat-front member (10), said air bag having a rear panel (26) that is placed along said seat-front member (10) when said air bag (4) is inflated, and a front panel (24) facing an occupant; and
a gas generator (6) for inflating said air bag (4),
wherein the length in the upward-downward direction of a center portion in the rightward-leftward direction of said front panel (24) when said air bag (4) is inflated is larger than the length in the upward-downward direction of a center portion in the rightward-leftward direction of said rear panel (26) when said air bag (4) is inflated, **characterized in that** the peripheral portions of the front panel (24) and the rear panel (26) are sewn together, thereby forming the air bag (4).

2. A leg protection device (1) for a vehicle occupant according to claim 1, wherein said front panel (24) has a tucked portion (34) so that the length in the upward-downward direction of said center portion in the rightward-leftward direction of said front panel (24) is larger than the length in the upward-downward direction of said center portion in the rightward-leftward direction of said rear panel (26).

## Patentansprüche

1. Beinschutzvorrichtung (1) für einen Fahrzeuginsassen, umfassend
einen Airbag (4), welcher innerhalb eines Sitzvorderteils (10) angeordnet ist, wobei der Airbag eine hintere Stoffbahn (26), welche entlang des Sitzvorderteils (10) angeordnet ist, wenn der Airbag (4) aufgeblasen ist, und eine vordere Stoffbahn (24), welche einem Insassen gegenüber liegt, aufweist; und
einen Gasgenerator (6) zum Aufblasen des Airbags (4),
wobei die Länge in der nach oben - unten gerichteten Richtung eines Mittelabschnitts in der nach rechts - links gerichteten Richtung der vorderen Stoffbahn (24), wenn der Airbag (4) aufgeblasen ist, größer ist als die Länge in der nach oben - unten gerichteten Richtung eines Mittelabschnittes in der nach rechts - links gerichteten Richtung der hinteren Stoffbahn (26), wenn der Airbag (4) aufgeblasen ist, **dadurch gekennzeichnet, dass** die Umfangsabschnitte der vorderen Stoffbahn (24) und der hinteren Stoffbahn (26) zusammengenäht sind, wobei der Airbag (4) ausgebildet wird.

2. Beinschutzvorrichtung (1) für einen Fahrzeuginsassen nach Anspruch 1, wobei die vordere Stoffbahn (24) einen verstauten Abschnitt (34) aufweist, so dass die Länge in der nach oben - unten gerichteten Richtung des Mittelabschnitts in der nach rechts - links gerichteten Richtung der vorderen Stoffbahn (24) größer als die Länge in der nach ober - unten gerichteten Richtung des Mittelabschnitts in der nach rechts - links gerichteten Richtung der hinteren Stoffbahn (26) ist.

## Revendications

1. Dispositif (1) de protection des membres inférieurs pour un occupant de véhicule, comprenant :
- un coussin gonflable (4) disposé à l'intérieur d'un élément (10) avant de siège, ledit coussin gonflable ayant un panneau arrière (26) qui est placé le long dudit élément (10) avant de siège lorsque ledit coussin gonflable (4) est gonflé, et un panneau avant (24) faisant face à un occupant ; et
- un générateur (6) de gaz pour gonfler ledit coussin gonflable (4),
dans lequel la longueur dans la direction haut-bas d'une portion centrale dans la direction à droite-à gauche dudit panneau avant (24) lorsque ledit coussin gonflable (4) est gonflé est plus importante que la longueur dans la direction haut-bas d'une portion centrale dans la direction à droite-à gauche dudit panneau arrière (26) lorsque ledit coussin gonflable (4) est gonflé, **caractérisé en ce que** les portions périphériques du panneau avant (24) et du panneau arrière (26) sont cousues ensembles, de sorte à former le coussin gonflable (4).

2. Dispositif (1) de protection des membres inférieur pour un occupant de véhicule selon la revendication 1, dans lequel ledit panneau avant (24) présente une portion (34) rentrée de sorte que la longueur dans la direction haut-bas de ladite portion centrale dans la direction à droite-à gauche dudit panneau avant (24) est plus importante que la longueur dans la direction haut-bas de ladite portion centrale dans la direction à droite-à gauche dudit panneau arrière (26).
